Europäisches Patentamt

European Patent Office

Office européen des brevets

(11) Publication number: **0 308 701 B1**

# EUROPEAN PATENT SPECIFICATION

(45) Date of publication of patent specification: **25.11.92**  (51) Int. Cl.⁵: **G21C  15/02**, G21C 3/34

(21) Application number: **88114337.4**

(22) Date of filing: **02.09.88**

(54) **Swirl vanes integral with spacer grid.**

(30) Priority: **24.09.87 US 100678**

(43) Date of publication of application:
**29.03.89 Bulletin  89/13**

(45) Publication of the grant of the patent:
**25.11.92 Bulletin  92/48**

(84) Designated Contracting States:
**CH DE ES IT LI SE**

(56) References cited:
**EP-A- 0 148 452
DE-A- 1 514 558
DE-B- 1 439 123
US-A- 3 764 470**

(73) Proprietor: **GENERAL ELECTRIC COMPANY
1 River Road
Schenectady New York 12305(US)**

(72) Inventor: **Johansson, Eric Bertil
1219 Olive Branch Lane
San Jose California 95120(US)**
Inventor: **Bulger, Louis Charles
3300 Narvaez Avenue, SP. 10
San Jose California 95136(US)**

(74) Representative: **Catherine, Alain
General Electric France Service de Propriété
Industrielle 18 Rue Horace Vernet
F-92136 Issy-Les-Moulineaux Cedex(FR)**

## Description

This invention relates to spacers for fuel rods contained within square cross-sectioned fuel channels utilized in the core of nuclear boiling water reactors (BWRs). More particularly, a spatial separator for the fuel rods contained within a channel is disclosed which includes the serendipitous purpose of steam water separation for optimum steam generation.

A BWR fuel assembly consists of an array of fuel rods enclosed by a typically square sectioned channel. Spacers allocated at several axial positions in the assembly (typically for 7 locations). The spacers are typically 2.54 to 5.08 cm (one to two inches) in axial length; the fuel channels are typically 406.4 cm (160 inches) in axial length. The primary functions of the spacers are to locate the individual fuel rods in their correct positions in the array, to prevent vibration of the rods, and to support the fuel rods when the fuel assembly is subject to handling and seismic loadings.

Subcooled water enters at the bottom of the fuel assembly and is heated by the fuel rods. Part way up the assembly the water reaches its boiling point and steam formation begins. At the beginning of the boiling region there is a thick film of water on the fuel rods, with a steam/water mixture in the regions between the fuel rods. Moving up the assembly, the water film thickness decreases. A design requirement for BWR fuel assemblies is to maintain a water film over the full length of the fuel rods. This requirement limits the power which can be generated in a fuel assembly and is difficult to meet in modern high energy output reactors.

The spacers are unavoidable restrictions to the coolant flow (steam/water mixture), so a design objective is to minimize the pressure drop introduced by the spacers.

The spacers have a beneficial effect on the water film. Each spacer causes a disruption of the steam/water flow, and deposits some water droplets on the fuel rods.

The objectives of minimum pressure drop dictates a spacer with minimum flow obstruction while the objective of maximum water deposition requires a more massive stucture. Current spacers designs are a compromise between these objectives.

It is known to have a fuel assembly within a reactor in which rods extending the full length of the channel are accompanied by helical elements extending the full length of the channel. See paper entitled On Fuel Assemblies with Deflectors for Steam Water Separation for Boiling water Reactors by Jorgën and Marstraid published by the Library of the Danish Atomic Energy Commission Research Establishment Riso, July 1971. This reactor effectively substituted the helical elements extending the full length of the fuel channel for rod elements. Abnormal back pressures in the rising steam water mixture were present because of the length of the helical elements. Additionally, the material required to fabricate such elements constituted an absorber of neutrons degrading reactor performance.

From EP-A-148 452 it is known to utilize egg crate type spacers. These spacers can have short vanes on the top of the egg crates where they brace the rod. This does impart turbulence to the passing fluid. The separation of steam from water with the classification of the water to and towards the rods within the reactor is not disclosed or suggested.

The present invention provides a spacer assembly for imparting a swirl to a passing steam water mixture within an elongate polygon sectioned fuel channel having longitudinally extending fuel rods characterized in that it comprises in combination:

a matrix of helically twisted sheet metal spacing elements, each helically twisted sheet metal element forming a continuous helix and having a small fraction of the total length of said elongate fuel channel, said helically twisted sheet metal elements being arranged so that each of said fuel rod has a plurality of said helically twisted sheet metal spacing elements surrounding a small fraction of the total length of said rod in the same horizontal plane of said rode,

each helically twisted sheet metal element intermediate an upper helically twisted end and a lower helically twisted end defining protruding lattice connectors spanning between adjacent said helical elements to form points of connection between adjacent said discrete helically twisted sheet metal elements to enable each said helically twisted sheet metal element to be joined into a matrix to form a cell of said helical elements about each said fuel rod;

means connecting said defined protuding lattice connectors together whereby said helical elements space said fuel rods one from another, space said fuel rods from said fuel channel and impart a helical flow and turbulence to a passing fluid stream.

A spacer assembly for imparting a swirl to a passing stream water mixture within a fuel channel of a boiling water reactor is disclosed. The spacer assembly is placed at periodic intervals along the inside of a square cross sectioned fuel channel so as to separate the fuel containing rods from each other and the fuel channel sides. Each discrete spacer element is constructed of a matrix of helically twisted sheet metal spacing elements for the serendipitous purpose of providing separation of steam from the water in steam/water mixture, and depositing water on the fuel rod surface. Each helical element is a twisted planar metallic member and includes a rotation of the metal surfaces in the order of 450° over a typical 5.08 cm (two inches) of length. For each 90° interval of rotation from the top and bottom of each helical element, paired lattice connections are provided for attachment to adjoining elements. Intermediate of the lattice connectors for confrontation to the spaced apart fuel rods, there are placed rod stops for bearing directly against the fuel rods. The lattice connections at intermittent locations also form spring supports for exposing one spring to each cell defined by four adjacent helical elements. The supported spring biases the fuel rod to one cell side. Alternately, provision can be made for forming the helical elements with central longitudinally extending slots to form integral built-in springs, alternately in adjacent clockwise and counter-clockwise dispositions. When the spacers are installed at spaced apart vertical locations within a fuel channel (for example 7 (two-inch) 5.08 cm spacers evenly distributed along a fuel channel in the order of 406.4 cm (160 inches) of length), steam separation to the inside of each helical element with water separation to the outside of each helical element and onto the steam generating rods occurs. The resultant spacer thus improves the thermodynamics of steam generation by maintaining water on the fuel rods, separating the steam from the water in the steam/water flow, and providing a lighter and less neutron absorbing metallic mass in the reactor than prior art spacers.

The invention of the subject disclosure is an improvement over current spacers. It deposits more water on the fuel rods and has a lower pressure drop. The water deposition is accomplished by swirl vanes which impart a swirl component to the coolant flow. The swirl vanes provide a major part of the spacer structure, and offer little resistance to the coolant flow. The action of the swirl vanes can be described.

A swirl vane is located in each subchannel to create a swirl flow, or vortex, in each subchannel. The swirl vane consists of a twisted strip with projecting arms. The projecting arms are welded to the projecting arms of adjacent swirl vanes, to form a continuous structure.

The swirl flow creates a centrifugal force acting radially outward from the center of the subchannel. The heavy water droplets move towards the fuel rods because of the centrifugal force. This physical principle is used in steam separators and in centrifuges, but with different geometries. The swirl flow persists for some distance after each spacer, so that water deposition on the fuel rods continues between spacers.

The swirl vanes consist of twisted strips of Zircaloy or Inconel. As the water/steam mixture in the subchannel flows through the spacer, the twisted strip forces it to follow a helical path, imposing a rotational component of flow.

The amount of material used in the disclosed swirl vanes spacers is less than that of prior art spacers. The cross-sectional area of the swirl vane spacer is also less than that of prior art spacers, giving less restriction of the coolant flow through the spacer. The swirl flow affects the flow distribution between spacers concentrating the steam in the central region of each subchannel. The flow distribution gives a lower pressure drop between spacers than is obtained with prior art spacers. There is some pressure drop associated with creating the swirl flow but the net effect is to give a lower pressure drop through the fuel bundle.

Other objects, features, and advantages of this invention will become more apparent after referring to the following specification and attached drawings in which:

Fig. 1 is a perspective view of four helical elements joined in a cell array about a fuel rod shown in phantom with arrow schematics illustrating the helical turbulence imparted to an upwardly flowing steam water mixture:

Fig. 2 is a perspective, broken away, of a fuel channel illustrating one spacer according to this invention placed interiorly of a square sectioned fuel channel;

Fig. 3A is a plan view of a planar metal sheet cut to fabricate an individual helical element of this invention;

Fig. 3B is an illustration of a counter clockwise twisted metal element of Fig. 3A, the element being twisted over 450° of helical revolution;

Fig. 3C is the element of Fig. 3B rotated 90° so that the alternate disposition of the lattice connectors may be completely understood;

Fig. 4A is a schematic view looking down upon a spacer cell with a fuel rod contained therein illustrating the spring bias of the rod against stops defined by the helical element;

Fig. 4B is a side elevation of the view of Fig. 4A illustrating placement of the spring; and

Fig. 4C is a view of the spring;

Fig. 4D is a view of a first alternate embodiment of the spring;

Fig. 4E is a view of a second alternate embodiment of the spring:

Fig. 5A is a plan schematic of a spacer according to that shown in Fig. 2 illustrating placement of the spring stops and subchannel assembles;

Fig. 5B is a plan of a subchannel assembly;

Fig. 6A is a plan of the outer edge of the spacer; and

Fig. 6B is a side elevation of the outer end of a spacer;

Fig. 7A is a side elevation of a slit helical element (similar to Fig. 3A), the slit being placed for the introduction of spring forces into the individual element;

Fig. 7B is a side elevation of the twisted element similar to Fig. 3B;

Fig. 7C is a side elevation of the rotated element similar to Fig. 3C;

Fig. 8A is a plan view of the spacer elements of Fig. 7 assembled in a cell array;

Fig. 8B is a side elevation view of the spacer elements of Fig. 8A; and

Fig. 9 is an exploded view of a jig capable of holding the spacer elements in an array to enable the elements to be spot welded or laser welded into the assembly shown in Fig. 2.

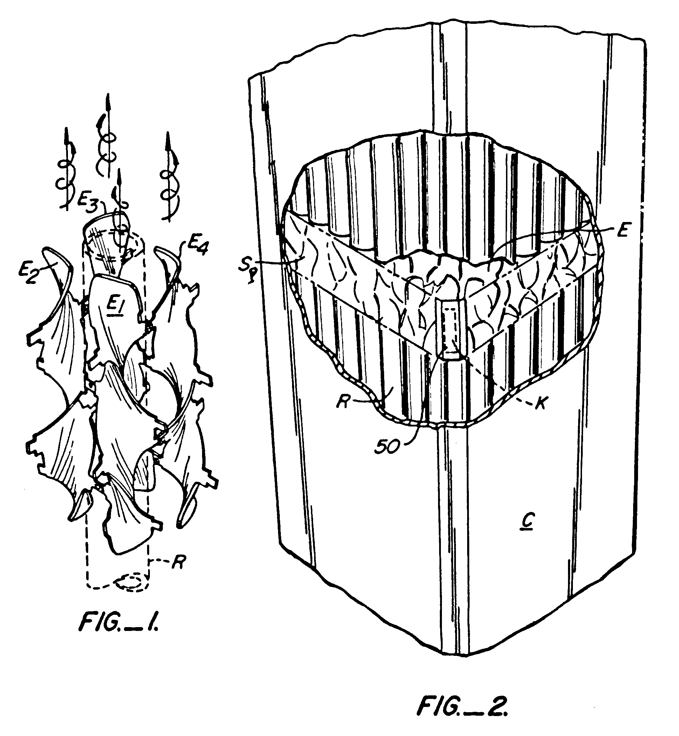

Referring to Fig. 1, the serendipity of this invention can be easily understood. A fuel rod R is shown in broken lines. It is surrounded by helical spacer elements E1, E2, E3, and E4. These four helical spacer elements E1-E4 form a cell for confining the rod R.

At the sane time, the spacer elements impart swirl to the passing steam water stream circulating upwardly through the fuel channel.

Helical elements E1, E3 are twisted in the clockwise direction. Consequently they impart to the after water steam flow a clockwise helical path.

Likewise, elements E2, E4 are twisted counterclockwise. Consequently, they impart to the passing water steam flow a counterclockwise helical path.

This vortex has a classifying effect on the steam water mixture. Specifically, the water will be thrown to the outside of the helix and thus onto rod R (or adjacent rods not shown). Steam, being lighter, will confine itself more centrally of the elements E1-E4. In such confinement the steam will occupy the volume which was interstitial to the rods.

Rods R can have heat transfer problems related to steam generation. Specifically, if large areas of steam accumulate on the surface of the rods, the normal transfer of heat from the water to the passing stream does not occur. The rod can develop local hot spots. This is especially true to and toward the top part of the channel.

Further, the reader will understand that this description is a simplification. There have, in fact, been identified feedback characteristics to such pockets which seriously interfere with reactor efficiency. Simply stated, by the intermittent placement of the spacer element of this invention, these difficulties are lessened.

Referring to Fig. 2, the placement of a typical spacer is illustrated. Channel C is shown having a plurality of rods R confined within the channel. The side wall of channel C is broken away at the spacer Sp. The spacer Sp includes numerous elements E joined in a matrix.

The reader will understand that the fuel channels are on the order of 406.4 cm (160 inches) in length. The individual spacer elements are on the order of 5.08 cm (two inches) in length. Typically, seven such spacers are distributed along the length of any individual fuel channel. It will, therefore, be understood that the spacers have two functions.

First, and as to those areas of the rod wherein the spacers overlap, they impart the described swivel flow.

Secondly, and as to the volume of water within the channel about the rods between the spacers, overall swirl flow with the disclosed separation of steam and water is imparted.

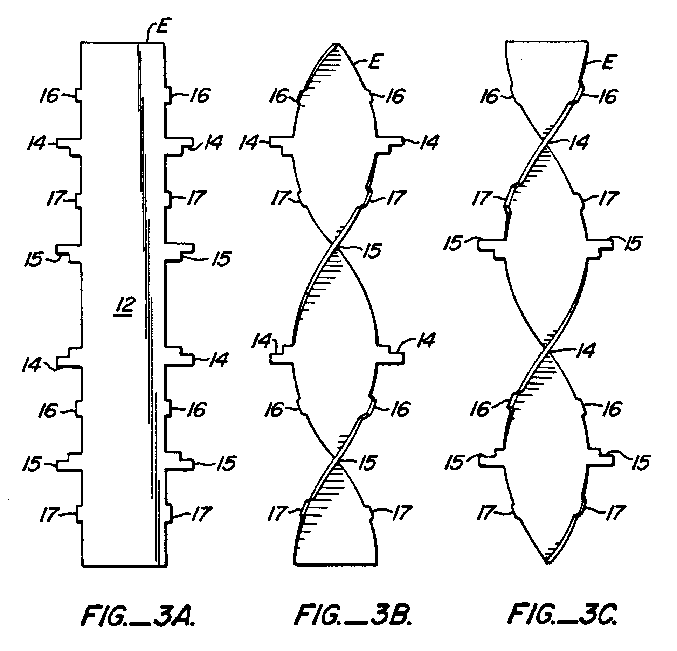

Referring to Fig. 3A, the construction of an individual element E is schematically illustrated. First, element E includes a flat strip of metal 12 in a rectangular configuration. Metallic element 12 has two types of tabs protruding from its longitudinal side edges. The first of these tabs are lattice connectors 14, 15. Lattice connectors 14 are disposed so as to remain exposed in the same plane of every 180° of rotation. They form the connection of the respective elements one to another.

Lattice connectors 15 are disposed at an angle 90° with respect to connectors 14. These respective lattice connectors form connections to adjacent elements.

It will be seen that the lattice connectors 14, 15 are L-shaped. The base of the L is to and towards the side edge of the rectangular strip 12. The shank of the L is normal to and directed away from the side edge of the strip 12.

A second protruding element includes stops 16, 17. These respective stops bear against the surfaces of adjacent fuel rods. Two paired stops 16 and 17 are found in the top 180° of rotation of the elements. Likewise, two stops 16 and 17 are found in the bottom 180° rotation of the elements. This disclosed placement of stops will be shown to provide eight discrete stops surrounding each fuel rod.

Fabrication of the individual elements E can be easily understood. Typically the material will be stamped from sheet metal. Thereafter, twisting over the disclosed 450° of angle can occur. This can occur either by exerting tension between the top and bottom edges and physically twisting or by stamping the element E in stages to impart twist.

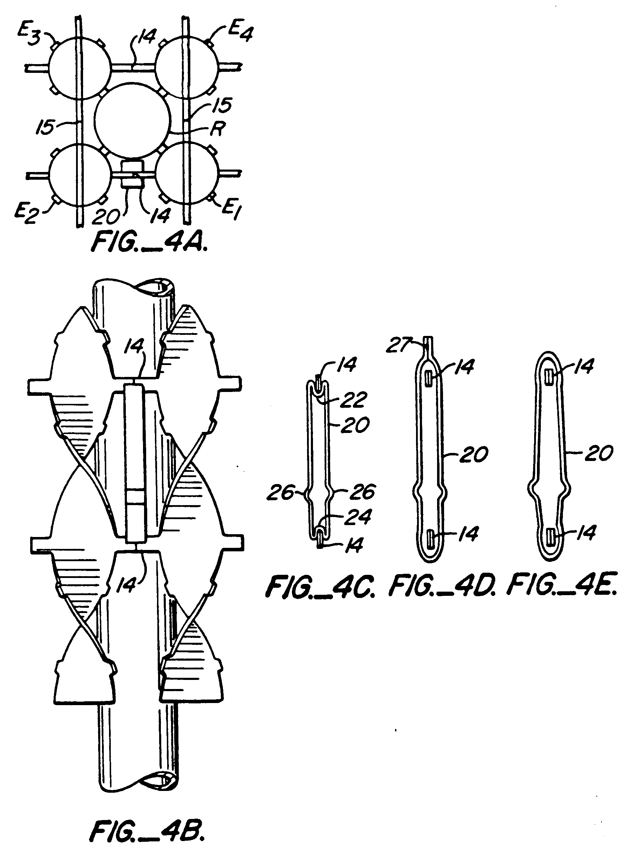

Referring to Figs. 4A, 4C, it has been found possible to place a spring within the matrix of elements E. Referring to Fig. 1, elements E1, E2, E3 and E4 are illustrated. These elements form a cell. Matrix connectors 14 and 15 are likewise illustrated. These matrix connectors 14 have been welded together.

Referring to Fig. 4C, a spring is illustrated. The spring typically comprises an endless loop of metal 20. The loop is bent with a notch 22 at the top and a notch 24 at the bottom. These notches fit to the respective joined matrix connectors 14. The spring includes two protuberances 26. Protuberances 26 are capable of contacting a rod on one and the other sides of the spring. It can thus be seen that one placed spring in accordance with Fig. 4C biases rods in two cells. It will be seen that the spacer element only requires one spring exposed to each cell. Therefor, one spring will usually accommodate the needs of two adjacent cells.

Referring to Fig. 4D, an alternate embodiment of the spring 20 is disclosed. Specifically endless loop by a spot weld on two parallel portions of the spring. Preferably, the spring ends are spot welded so as to close over tabs 14 or 15 extending between adjacent helical elements.

Referring to Fig. 4E, a second alternate embodiment of the spring 20 is disclosed. In this case the endless loop of the spring is placed in between the tabs 14, 15 as the discrete elements are joined in a matrix. It should be apparent from the examples shown that construction here illustrated, spring 20 will admit of numerous modifications.

Referring to Fig. 4A, it will be noticed that with the presence of the spring 20, some of the stops 16, 17 are not used. Conceivably, these stops could have been removed from the metal strip 12 before it was twisted to form the helical shape herein disclosed. However, this is not preferred as the axial symmetry disclosed in Fig. 3A enables twisting of the resultant strips to be uniform.

It will also be realized that those stops utilized for clockwise twisting, are the stops that are not utilized when the strip is twisted counterclockwise-assuming the identical placement of the spring 26 with respect to the rod. Likewise, for counterclockwise twisting, the stops that are not utilized are utilized when the twisting is clockwise. It will thus be realized that as a practical matter maintaining the symmetry shown enables one stamped part to serve with uniformity in all cell locations.

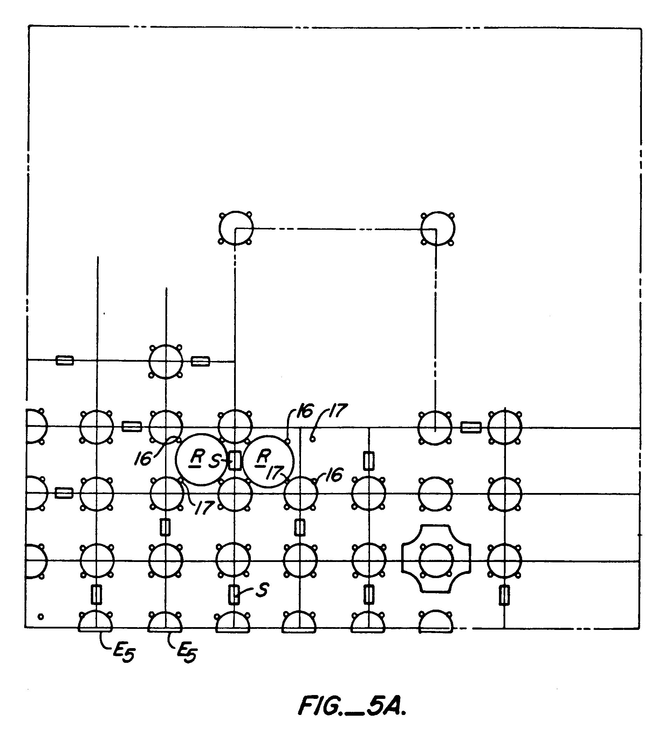

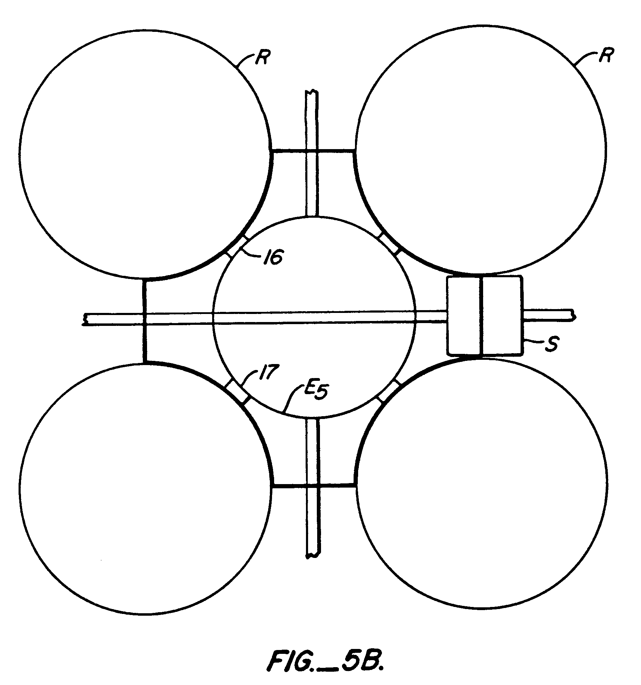

Referring to Fig. 5A, a schematic diagram is illustrated. The diagram shows two rods R, stops 16 and 17, with intermediate spring S. The spring S biases the rods in each of the discrete cells onto adjacent stops.

It will be noted that with respect to Fig. 5A, that truncation of the elements E5 has occurred. This truncation has occurred at the side edge.

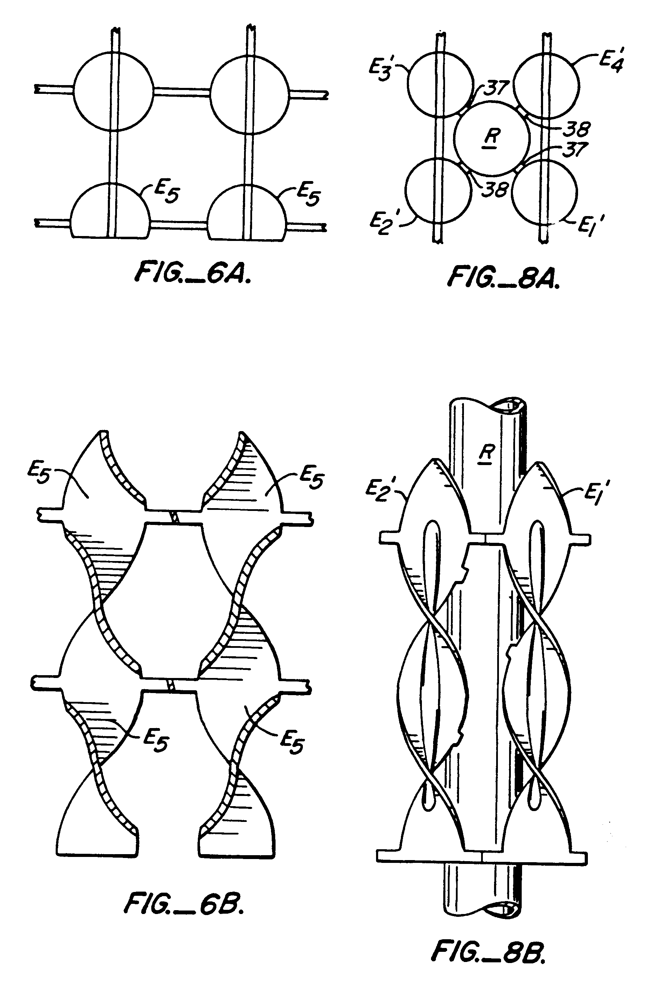

Referring to Fig. 6B, the appearance of the spiral elements E is shown in the plan.

It is, of course, possible to build within the spiral elements E a natural spring mechanism. Such a natural spring mechanism is illustrated with respect to Figs. 7A, 7B, and 7C.

Referring to Fig. 7A, a rectangular sheet 32 defining a longitudinal slit 34 is illustrated. Matrix connectors 34 are located at the bottom and 90° of rotation from the top. Matrix connectors 35 are located at the top and at 90° rotation from the bottom. Appropriate stops 36, 37, and 38 are defined therebetween.

Looking to Fig. 7B, lattice connectors 34 form a connection to the lattice along one plane. Referring to Fig. 7C, lattice connectors 35 form a connection along an orthogonal plane.

It can be seen that the center section of the element E' is resilient.

Referring to Fig. 8A, elements E1', E2', E3' and E4' are shown about a rod R. The helical elements E1'-E4' bias at their stops against the rod R. This construction is illustrated in plan at Fig. 8B.

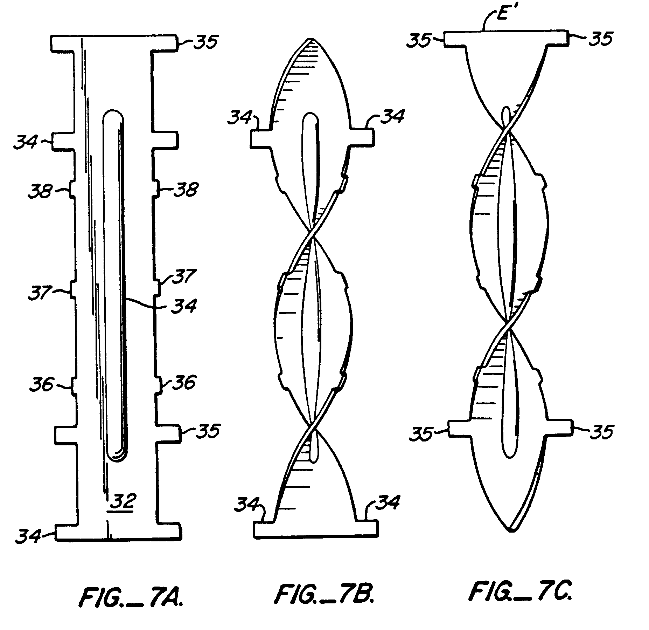

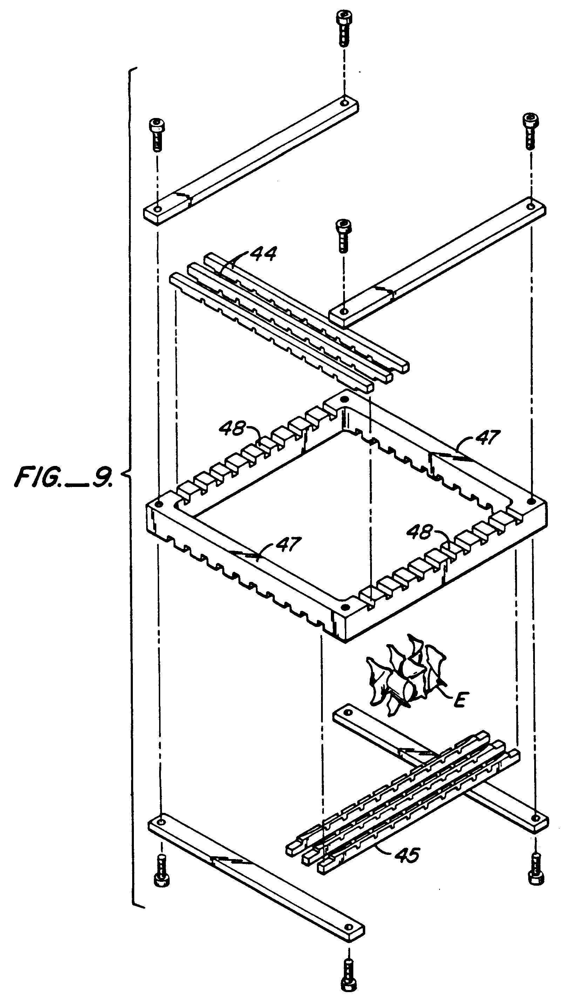

Referring to Fig. 9, an exploded view of a jig for fabrication of the matrix elements is illustrated. Specifically, elements E are captured at their respective matrix connectors 14 and 15. They are captured so that the matrix connectors are disposed side-by-side. Such capture occurs with elements 14 being trapped by notched bars 44 and elements 15 being trapped by notched bars 45. Such trapping occurs between bars 47 overlying bars 45 and bars 48 bars 44.

The reader will understand that it may be desirable to place the springs in a loop around the matrix connectors. In such placement, around the matrix connectors, the springs are placed first in the jig. Thereafter, the springs are manipulated one side or to the other side while the required spot welds are made.

It may be desirable to place corner elements K to the matrix. Such corner elements K can be spot welded and can include a stop on the inside edge thereof (shown in broken lines at 50 in Fig. 2).

The reader will understand that variations in the length and width of the individual elements making up this novel spacer can occur. For example, spacer elements need not be restricted to the preferred length set forth herein. For example, spacer elements need not be restricted to the preferred length and width set forth herein. The length and width can be adjusted depending on fuel bundle design requirements. If low pressure drop through the spacer is desired, the width of the elements is reduced and the length is increased to give a weaker swirl component of flow. If maximum separation of steam and water is desired, the maximum width is used and the length is reduced.

The reader will thus understand that there is shown a serendipitous rod spacer device. The required rod spacing is maintained, heat transfer from high power reactor fuel rods is improved, and pressure loss through the spacer is reduced.

**Claims**

1. A spacer assembly (S) for imparting a swirl to a passing steam water mixture within an elongate polygon sectioned fuel channel (C) having longitudinally extending fuel rods (R) characterized in that it comprises in combination:

    a matrix of helically twisted sheet metal spacing elements (E1-E4), each helically twisted sheet metal element forming a continuous helix and having a small fraction of the total length of said elongate fuel channel, said helically twisted sheet metal elements being arranged so that each of said fuel rods has a plurality of said helically twisted sheet metal spacing elements surrounding a small fraction of the total length of said rod in the same horizontal plane of said rod,

    each helically twisted sheet metal element (E1-E4) intermediate an upper helically twisted end and a lower helically twisted end defining protruding lattice connectors (14,15) spanning between adjacent said helical elements to form points of connection between adjacent said discrete helically twisted sheet metal elements to enable each said helically twisted sheet metal element to be joined into a matrix to form a cell of said helical elements about each said fuel rod;

    means connecting said defined protuding lattice connectors together whereby said helical elements space said fuel rods one from another, space said fuel rods from said fuel channel and impart a helical flow and turbulence to a passing fluid stream.

2. The spacer assembly of claim 1 characterized in that each of said fuel rods is contained within a cell surrounded by for helical elements (E1-E4).

3. The spacer assembly of claim 1 characterized in that at least one of the helical elements of said spacer is formed clockwise and at least one of the helical elements of said spacer is formed counter clockwise.

4. The spacer assembly of claim 1 characterized in that it further includes a spring (20) connected to said spacer elements for biasing a rod in said cell.

5. The spacer assembly of claim 1 and wherein said helical element is centrally slit, said helical element having contact with said rod with spring bias at said slit.

6. The spacer assembly of claim 2 characterized in that said helical elements (E1-E4) are twisted to include a rotation of the metal surfaces in the order of 450° over a 5.08 cm (2 inches) of length.

7. A fuel assembly enclosed by a channel comprising a plurality of spacer assemblies as disclosed in anyone of claims 1 to 4, each of said spacer assemblies having a vertical length less than one-tenth, the length of said channel.

8. A process of constructing a spacer assembly as in anyone of claims 1 to 6 for a boiling water nuclear reactor comprising the steps of:

    providing a plurality of rectangular strips of metal (E1-E4);

    imparting substantially identical helical twists to said strips of metal, some of said strips being twisted clockwise and some others counter-clockwise;

    joining said strips with said helical twists in a matrix to form individual cells in which at least one of said strips is twisted clockwise and at least one of said strips is twisted counter-clockwise;

    placing fuel rods in said cells; and

    placing said rods and spacers within a complementary sectioned channel whereby said twisted strip elements space the rods one from another, space the rods together from the channel side wall and impart helical swirl flow to water passing upwardly and through the interstices between fuel rods in said channel.

**Patentansprüche**

1. Abstandsanordnung (S), um einer hindurchtretenden Dampf-Wassermischung eine Wirbelbewegung zu erteilen innerhalb eines langgestreckten, in Polygonabschnitte unterteilten Brennstoffkanals (C), der longitudinal verlaufende Brennstoffstäbe (R) aufweist, gekennzeichnet durch die Kombination:

    eine Matrix von schraubenförmig verdrehten Metallblech-Abstandselementen (E1-E4), die jeweils eine kontinuierliche Schraubenlinie bilden und einen kleinen Bruchteil der Gesamtlänge des langgestreckten Brennstoffkanals aufweisen, wobei die schraubenförmig verdrehten Metallblechelemente so angeordnet sind, daß jeder Brennstoffstab mehrere schraubenförmig verdrehte Metallblech-Abstandselemente hat, die einen kleinen Bruchteil der Gesamtlänge des Stabes in der gleichen horizontalen Ebene des Stabes umgeben,

    jedes schraubenförmig verdrehte Metallblechelement (E1-E4) zwischen einem oberen schraubenförmig verdrehten Ende und einem unteren schraubenförmig verdrehten Ende vorstehende Gitterverbinder (14, 15) bildet, die sich zwischen benachbarten schraubenförmigen Elementen erstrecken, um Verbindungspunkte zwischen benachbarten diskreten schraubenförmig verdrehten Metallblechelementen zu bilden, damit jedes schraubenförmig verdrehte Metallblechelement zu einer Matrix verbunden werden kann, um eine Zelle von schraubenförmigen Elemente um jeden Brennstoffstab herum zu bilden,

die vorstehenden Gitterverbinder miteinander verbindende Mittel, wodurch die schraubenförmigen Elemente die Brennstoffstäbe gegeneinander im Abstand halten, die Brennstoffstäbe im Abstand von dem Brennstoffkanal halten und einer hindurchtretenden Fluidströmung eine schraubenförmige Strömung und Turbulenz erteilen.

2.    Abstandsanordnung nach Anspruch 1, dadurch gekennzeichnet, daß jeder Brennstoffstab in einer Zelle enthalten ist, die von vier schraubenförmigen Elementen (E1-E4) umgeben ist.

3.    Abstandsanordung nach Anspruch 1, dadurch gekennzeichnet, daß wenigstens eines der schraubenförmigen Elemente des Abstandshalters in Uhrzeigerrichtung geformt ist und wenigstens eines der schraubenförmigen Elemente des Abstandshalters in Gegenuhrzeigerrichtung geformt ist.

4.    Abstandsanordnung nach Anspruch 1, dadurch gekennzeichnet, daß sie ferner eine Feder (20) aufweist, die mit den Abstandselementen verbunden ist, um einen Stab in der Zelle vorzuspannen.

5.    Abstandsanordnung nach Anspruch 1, wobei das schraubenförmige Elemente in der Mitte geschlitzt ist und Kontakt mit dem Stab mit einer Federvorspannung an dem Schlitz hat.

6.    Abstandsanordnung nach Anspruch 2, dadurch gekennzeichnet, daß die schraubenförmigen Elemente (E1-E4) so verdreht sind, daß sie eine Drehung der Metallflächen in der Größenordnung von 450° über einer Länge von 5,08 cm (2 Zoll) haben.

7.    Brennstoffanordnung, die durch einen Kanal eingeschlossen ist, der mehrere Abstandsanordnungen nach einem der Ansprüche 1 bis 4 aufweist, wobei jede Abstandsanordnung eine vertikale Länge hat, die kürzer als ein zehntel der Länge des Kanals ist.

8.    Verfahren zum Herstellen einer Abstandsanordnung nach einem der Ansprüche 1 bis 6 für einen Siedewasser-Kernreaktor, enthaltend die Schritte:

Herstellen mehrerer rechteckiger Streifen aus Metall (E1-E4),

den Metallstreifen im wesentlichen gleiche schraubenförmige Verdrehungen gegeben werden, wobei einige der Streifen in Uhrzeigerrichtung verdreht und andere in Gegenuhrzeigerrichtung verdreht werden,

Verbinden der Streifen mit den schraubenförmigen Verdrehungen in einer Matrix, um einzelne Zellen zu bilden, in denen wenigstens einer der Streifen in Uhrzeigerrichtung verdreht und wenigstens einer der Streifen in Gegenuhrzeigerrichtung verdreht ist,

Anordnen der Brennstoffstäbe in den Zellen und

Anordnen der Stäbe und Abstandshalter in einem komplementären, in Abschnitte unterteilten Kanal, wobei die verdrehten Streifenelemente die Stäbe gegeneinander im Abstand halten, die Stäbe gegenüber der Kanalseitenwand im Abstand halten und Wasser, das nach oben und durch die Zwischenräume zwischen den Brennstoffstäben in dem Kanal strömt, eine schraubenförmige Wirbelbewegung erteilen.

## Revendications

1.    Ensemble(s) d'éléments d'espacement pour communiquer un tourbillon à un mélange d'eau et de vapeur d'eau s'écoulant à l'intérieur d'un boîtier-canal (c) d'assemblage combustible, de section polygonale et de forme allongée, comportant des barres (R) de combustible s'étendant dans le sens longitudinal, **caractérisé** en ce qu'il comprend, en combinaison :

une matrice d'éléments d'espacement (E1-E4) en tôle, tordus hélicoïdalement, chaque élément en tôle, tordu hélicoïdalement, formant une hélice continue et ayant une longueur égale à une faible fraction de la longueur totale dudit boîtier canal allongé d'assemblage combustible, les éléments en tôle, tordus hélicoïdalement, étant disposés de manière que chacune des barres de combustible comporte une pluralité desdits éléments d'espacement en tôle, tordus hélicoïdalement, entourant une faible fraction de la longueur totale de la barre dans le même plan horizontal de cette barre,

chaque élément (E1-E4) en tôle, tordu hélicoïdalement, s'interposant entre une extrémité supérieure tordue hélicoïdalement et une extrémité inférieure tordue hélicoïdalement formant des éléments saillants (14, 15) de raccordement s'étendant entre lesdits éléments hélicoïdaux adjacents pour former des points de raccordement entre lesdits éléments individuels adjacents en tôle, tordus hélicoïdalement, pour permettre à chaque élément en tôle, tordu hélicoïdalement, d'être relié sous forme d'une matrice pour former une cellule desdits éléments hélicoïdaux autour de chaque barre de combustible ;

un moyen raccordant les uns aux autres lesdits éléments saillants de raccordement en treillis, grâce à quoi lesdits éléments hélicoïdaux espacent les barres de combustible les unes des autres, espacent les barres de combustible du boîtier-canal d'assemblage combustible et communiquent un écoulement hélicoïdal et une turbulence au courant de fluide qui passe.

2. Ensemble d'éléments d'espacement selon la revendication 1, **caractérisé** en ce que chacune des barres de combustible est contenue à l'intérieur d'une cellule entourée par quatre éléments hélicoïdaux (E1-E4).

3. Ensemble d'éléments d'espacement selon la revendication 1, **caractérisé** en ce qu'au moins un des éléments hélicoïdaux dudit élément d'espacement est formé dans le sens des aiguilles d'une montre et au moins un des éléments hélicoïdaux dudit élément d'espacement est formé en sens inverse des aiguilles d'une montre.

4. Ensemble d'éléments d'espacement selon la revendication 1, **caractérisé** en ce qu'il comprend, en outre, un ressort (20) accouplé auxdits éléments d'espacement pour exercer une poussée sur une barre dans ladite cellule.

5. Ensemble d'éléments d'espacement selon la revendication 1, et dans lequel l'élément hélicoïdal est fendu centralement, ledit élément hélicoïdal étant en contact avec la barre soumise à la poussée du ressort au niveau de ladite fente.

6. Ensemble d'éléments d'espacement selon la revendication 2, **caractérisé** en ce que les éléments hélicoïdaux (E1-E4) sont tordus de manière à présenter une rotation des surfaces métalliques de l'ordre de 450° sur 5,08 cm (2 inches) de longueur.

7. Assemblage combustible enfermé par un boîtier comprenant une pluralité d'ensembles d'éléments d'espacement tels que spécifiés dans l'une quelconque des revendications 1 à 4, chacun des ensembles d'éléments d'espacement ayant une longueur verticale inférieure à un dixième de la longueur du boîtier.

8. Procédé pour construire un ensemble d'éléments d'espacement selon l'une quelconque des revendications 1 à 6, pour un réacteur nucléaire à eau bouillante, comprenant les étapes consistant :

à réaliser une pluralité de bandes rectangulaires métalliques (E1-E4) ;

à communiquer auxdites bandes métalliques des torsions hélicoïdales sensiblement identiques, certaines desdites bandes étant tordues dans le sens des aiguilles d'une montre et certaines autres dans le sens inverse des aiguilles d'une montre ;

à relier sous forme d'une matrice lesdites bandes présentant lesdites torsions hélicoïdales de manière à former des cellules individuelles dans lesquelles au moins une des bandes est tordue dans le sens des aiguilles d'une montre et au moins une des bandes est tordue en sens inverse des aiguilles d'une montre ;

à placer des barres de combustible dans lesdites cellules ; et

à placer les barres et les éléments d'espacement dans un boîtier-canal de section complémentaire, grâce à quoi les éléments de bande tordue espacent les barres les unes des autres, espacent les barres ensemble de la paroi latérale du boîtier-canal et communiquent un écoulement tourbillonnaire hélicoïdal à l'eau s'écoulant vers le haut et à travers les interstices entre les barres de combustible dans ledit boîtier-canal.

FIG._1.

FIG._2.

FIG.\_3A.    FIG.\_3B.    FIG.\_3C.

FIG.__4A.

FIG.__4B.

FIG.__4C. FIG.__4D. FIG.__4E.

11

FIG.__5A.

*FIG.__5B.*

**FIG.\_6A.**

**FIG.\_8A.**

**FIG.\_6B.**

**FIG.\_8B.**

FIG.__7A.    FIG.__7B.    FIG.__7C.

FIG._9.